**Europäisches Patentamt**

**European Patent Office**

**Office européen des brevets**

(19)

(11) Numéro de publication: **0 215 695 B1**

(12) **FASCICULE DE BREVET EUROPEEN**

(45) Date de publication du fascicule du brevet:
14.03.90

(51) Int. Cl.⁴: **G01B 7/03**, G06K 9/22, G06K 11/06

(21) Numéro de dépôt: **86401785.0**

(22) Date de dépôt: **08.08.86**

(54) **Procédé pour localiser un objet et déterminer son orientation dans l'espace et dispositif de mise en oeuvre.**

(30) Priorité: **13.08.85  FR 8512327**

(43) Date de publication de la demande:
**25.03.87 Bulletin 87/13**

(45) Mention de la délivrance du brevet:
**14.03.90 Bulletin 90/11**

(84) Etats contractants désignés:
**DE GB NL**

(56) Documents cités:
**DE-A- 3 103 367**
**FR-A- 2 198 146**
**US-A- 4 029 899**
**US-A- 4 241 409**
**US-A- 4 317 078**

**IBM TECHNICAL DISCLOSURE BULLETIN,**
**vol. 3, no. 6, novembre 1960, page 22, New York, US; K.A.**
**AHMAD: "Signal communication apparatus"**

(73) Titulaire: **COMMISSARIAT A L'ENERGIE ATOMIQUE,**
**31/33, rue de la Fédération, F-75015 Paris(FR)**

(72) Inventeur: **Blanpain, Roland, Avenue Jules Ferry,**
**F-38380 Saint Laurent du Pont(FR)**
Inventeur: **Dumont, André, 37 Domaine Valetière Le**
**Fontanil, F-38120 Saint Egreve(FR)**
Inventeur: **Sonrel, Claude, Domaine des Angonnes,**
**Brie-et-Angonnes F-38320 Eybens(FR)**

(74) Mandataire: **Mongrédien, André et al, c/o**
**BREVATOME 25, rue de Ponthieu, F-75008 Paris(FR)**

## EP 0 215 695 B1

**Description**

La présente invention a pour objet un procédé pour localiser un objet et déterminer son orientation dans l'espace et un dispositif de mise en oeuvre.

Le problème de la localisation d'un objet et de la recherche de son orientation dans l'espace se pose fréquemment dans des domaines très divers comme le contrôle des déplacements d'éléments mobiles ou de maquettes (de navires ou de digues par exemple), la saisie d'écriture ou de contours, la robotique, etc...

Pour résoudre ce problème, on a déjà utilisé des procédés optiques ou ultrasoniques. On connaît aussi des procédés utilisant des accéléromètres, des palpeurs capacitifs ou résistifs, etc...

Certaines de ces techniques sont de mise en oeuvre difficile, notamment lorsque plusieurs milieux interviennent: c'est le cas notamment pour des objets partiellement immergés dans l'eau (navires, digues, etc...), l'immersion dans l'eau perturbant considérablement les conditions de propagation des ondes utilisées (optiques ou sonores). Dans le cas des tables de saisie d'écriture ou de contours, la pression de la main sur la table peut conduire encore à des difficultés d'exploitation.

On a proposé d'autres techniques utilisant la mesure d'un champ magnétique créé artificiellement au voisinage de l'objet à détecter. Ainsi, dans le document DE-A-3 103 367, il est décrit une technique consistant à munir une sonde à localiser de trois enroulements. Par ailleurs, une sonde émettrice est constituée de trois enroulements orientés en trièdre. Ces trois enroulements de la sonde émettrice sont excités séquentiellement par un courant et les tensions apparaissant dans les enroulements de la sonde réceptrice à localiser sont mesurées. Ces tensions permettent de déterminer l'éloignement des deux sondes.

La présente invention perfectionne ce genre de technique par l'utilisation d'un dipôle magnétique associé à chaque objet à localiser, de magnétomètres pour mesurer le champ magnétique créé par ce dipôle et par l'utilisation de fréquences d'excitation différentes pour différents objets, ce qui permet de les discriminer.

De façon précise, l'invention a pour objet un procédé pour localiser plusieurs objets et déterminer leur orientation dans l'espace, par mesure de champ magnétique, ce procédé étant caractérisé par le fait qu'il consiste à:

- équiper chaque objet d'au moins un dipôle magnétique constitué par un enroulement excité par un générateur de courant alternatif ayant une fréquence déterminée, un tel dipôle ayant une origine et un moment magnétique,
- disposer au moins un ensemble de mesures dans l'espace où est censé être situé l'objet, chaque ensemble comportant des magnétomètres directionnels aptes à mesurer la composante selon un axe du champ magnétique ambiant,
- mesurer à l'aide de cet ou de ces ensembles les composantes du champ le long des axes à ladite fréquence déterminée,
- calculer, en fonction du résultat de ces mesures, les coordonnées de l'origine de chaque dipôle par rapport aux ensembles de mesures, ce qui localise les objets et les angles d'orientation du moment dipolaire par rapport aux axes de mesure, ce qui donne leur orientation,
- les fréquences des générateurs de courant de chacun des objets étant toutes différentes et les mesures s'effectuant à chacune de ces fréquences, ce qui permet de distinguer les mesures pour chacun des objets.

La présente invention a également pour objet un dispositif de saisie d'écriture et de contours qui met en oeuvre un tel procédé.

De toute façon, les caractéristiques et avantages de l'invention apparaîtront mieux après la description qui suit, d'exemples de réalisation donnés à titre explicatif et nullement limitatif. Cette description se réfère à des dessins annexés sur lesquels:

- la figure 1 illustre schématiquement le principe de l'invention,
- la figure 2 montre un exemple d'enroulements permettant de constituer un trièdre trirectangle de mesure,
- la figure 3 précise les notations permettant de repérer un point dans un système de référence à deux trièdres trirectangles,
- la figure 4 précise les notations permettant de repérer l'orientation d'un moment dipolaire,
- la figure 5 illustre schématiquement un système de saisie d'écriture ou de contours selon l'invention,
- la figure 6 montre l'emplacement de deux trièdres de référence par rapport à un support de saisie à trois dimensions,
- la figure 7 montre l'organisation générale d'un dispositif de saisie selon l'invention.

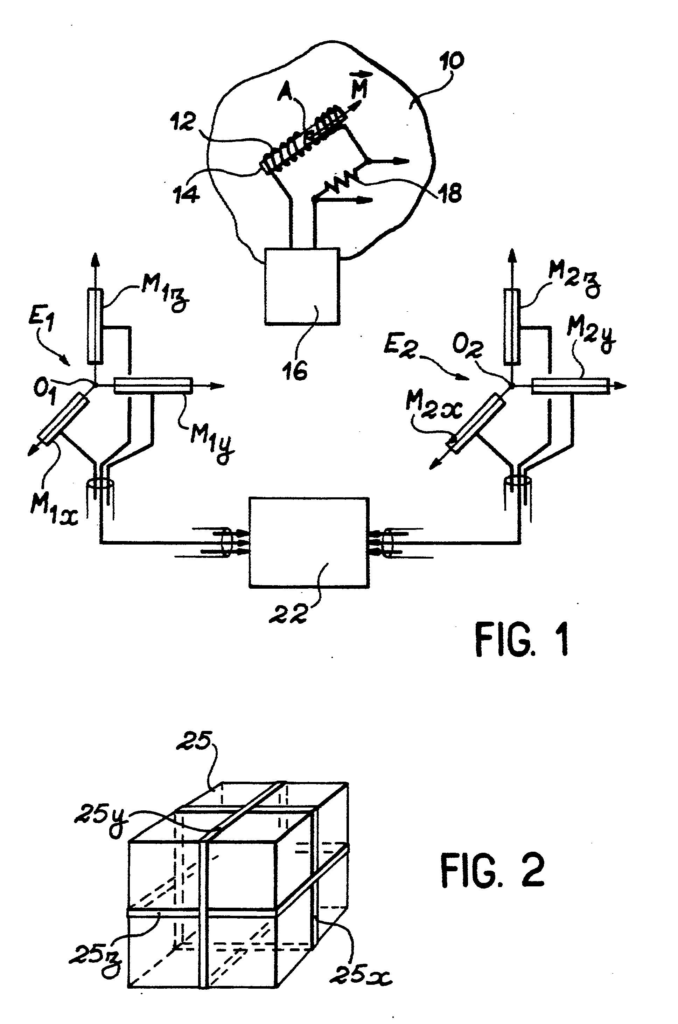

La figure 1 illustre le principe du procédé de l'invention dans le cas le plus général où l'objet possède six degrés de liberté. L'objet dont on veut déterminer la position et/ou l'orientation est référencé 10. Un dipôle magnétique est rendu solidaire de cet objet. Il est constitué par un enroulement 12 et un noyau magnétique 14, de préférence feuilleté pour éviter les courants de Foucault. Mais le noyau ferromagnétique n'est pas obligatoire. Il permet seulement d'amplifier le signal sans augmenter les dimensions de la bobine d'excitation. Ce dipôle possède une origine A et un moment dipolaire $\vec{M}$. L'enroulement 12 est alimenté par un générateur 16 fournissant un courant alternatif ayant une fréquence déterminée. Selon la taille de l'objet 10, le générateur 16 peut être incorporé à l'objet (comme on en verra un exemple plus loin) ou en être séparé et être relié à lui par des fils de connexion. Une résistance 18 permet éventuellement de prélever une tension dont la fréquence est égale à la fréquence d'excitation, pour des raisons qui apparaîtront ultérieurement.

Les moyens pour déterminer la position de A et l'orientation de $\vec{M}$ dans l'espace comprennent deux ensembles $E_1$ et $E_2$ constitués chacun par trois magnétomètres directionnels orientés en trièdres trirectangles, soit respectivement $M_{1x}$, $M_{1y}$, $M_{1z}$ pour le premier et $M_{2x}$, $M_{2y}$ et $M_{2z}$ pour le second. Ces trièdres ont comme origines respectives les points $O_1$ et $O_2$.

Les signaux émis par ces ensembles de mesure (3 pour chaque ensemble) sont adressés à un ensemble de traitement 22 qui peut remplir diverses fonctions : calcul, mémorisation, visualisation, transmission, etc...

Un magnétomètre directionnel pouvant être utilisé dans l'invention est décrit dans le document FR-A-2 198 146. Il utilise une couche mince ferromagnétique déposée sur un cylindre et il donne la valeur de la composante du champ magnétique ambiant le long de l'axe du cylindre. Trois magnétomètres de ce type peuvent être groupés en trièdre trirectangle. Dans le cas d'une localisation très précise, il est nécessaire de tenir compte des distances entre axes de mesure puisque la mesure n'est pas effectuée au même point pour chaque axe.

Les enroulements des trièdres peuvent être bobinés comme illustré sur la figure 2, sur un cube 25, selon trois bobines $25_x$, $25_y$, $25_z$.

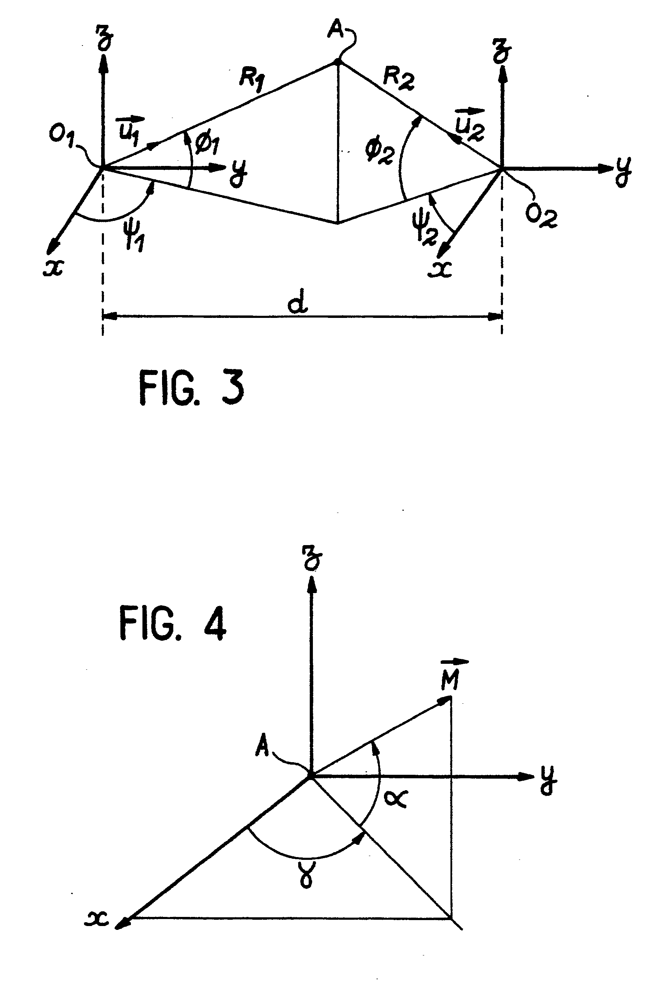

Les figures 3 et 4 permettent de préciser les notations utilisées pour le calcul des coordonnées du point A et de l'orientation du vecteur $\vec{M}$, à partir de la mesure des champs magnétiques.

Dans le trièdre $O_{1xyz}$ (figure 3) le vecteur $\vec{O_1A}$ est repéré par un vecteur unitaire $\vec{u_1}$ dont les angles en coordonnées sphériques sont $\Psi_1$ et $\emptyset_1$. Le point A a donc comme coordonnées sphériques $\Psi_1$, $\emptyset_1$ et $R_1$ ; de même dans le repère $O_{2xyz}$ où le vecteur unitaire $\vec{u_2}$ a pour angles $\Psi_2$ et $\emptyset_2$ et $\emptyset_2$ et le point A les coordonnées sphériques $\Psi_2$, $\emptyset_2$ et $R_2$. Par ailleurs, $O_1$ et $O_2$ sont distants de $\underline{d}$.

Si l'on se place maintenant dans un trièdre trirectangle ayant comme origine le point A, le moment dipolaire magnétique $\vec{M}$ peut être repéré par les angles $\gamma$ et $\alpha$. Son module est noté $|M|$.

Les champs mesurés en $O_1$ et $O_2$ comprennent trois composantes, respectivement $h_{1x}$, $h_{1y}$, $h_{1z}$ et $h_{2x}$, $h_{2y}$, $h_{2z}$ dirigées selon les trois axes des trièdres. Pour simplifier les notations, on adoptera une écriture matricielle, une grandeur matricielle étant notée par une lettre soulignée. Ainsi, les champs mesurés par $E_1$ et $E_2$ ont pour valeurs:

$$\underline{h_1} = \begin{bmatrix} h_{1x} \\ h_{1y} \\ h_{1z} \end{bmatrix} \quad et \quad \underline{h_2} = \begin{bmatrix} h_{2x} \\ h_{2y} \\ h_{2z} \end{bmatrix}$$

On aura de même une matrice $\underline{M}$ caractérisant le moment dipolaire magnétique, dont le module est M

$$\underline{M} = |M| \begin{bmatrix} \cos\alpha \cdot \cos\gamma \\ \cos\alpha \cdot \sin\gamma \\ \sin\alpha \end{bmatrix}$$

Pour les vecteurs unitaires $\vec{u_1}$ et $\vec{u_2}$ on a:

$$\underline{u}_1 = \begin{bmatrix} \cos\phi_1 \cdot \cos\Psi_1 \\ \cos\phi_1 \cdot \sin\Psi_1 \\ \sin\phi_1 \end{bmatrix} \qquad \underline{u}_2 = \begin{bmatrix} \cos\phi_2 \cdot \cos\Psi_2 \\ \cos\phi_2 \cdot \sin\Psi_2 \\ \sin\phi_2 \end{bmatrix}$$

On a aussi :

$$\underline{u}_1 = \begin{bmatrix} u_{1x} \\ u_{1y} \\ u_{1z} \end{bmatrix} \qquad \underline{u}_2 = \begin{bmatrix} u_{2x} \\ u_{2y} \\ u_{2z} \end{bmatrix}$$

Un calcul classique permet de déterminer le champ $\underline{h}$ en un point de l'espace créé par un dipôle magnétique $\underline{M}$ défini par un vecteur $\vec{u}$ et situé à la distance R :

$$\underline{h} = \frac{1}{4\pi} \quad \frac{3\underline{u}\,\underline{u}^t - \underline{\underline{I}}}{R^3} \quad \underline{M}$$

où $\underline{u}^t$ est la matrice transposée de $\underline{u}$, $\underline{\underline{I}}$ est la matrice unité :

$$\underline{\underline{I}} = \begin{bmatrix} 1 & 0 & 0 \\ 0 & 1 & 0 \\ 0 & 0 & 1 \end{bmatrix}$$

Cette équation correspond à trois équations pour le repère $O_{1xyz}$ et trois équations pour le repère $O_{2xyz}$, soit respectivement :

$$\underline{h}_1 = \frac{1}{4\pi} \quad \frac{3\underline{u}_1\,\underline{u}_1^t - \underline{\underline{I}}}{R_1^3} \quad \underline{M} \qquad (1, 2, 3)$$

$$\text{où } R_1 = \left| \overrightarrow{O_1 A} \right|$$

$$\underline{h}_2 = \frac{1}{4\pi} \frac{3\underline{u}_2\,\underline{u}_2^t - \underline{\underline{I}}}{R_2^3} \quad \underline{M} \qquad (4, 5, 6)$$

$$\text{où } R_2 = \left| \overrightarrow{O_2 A} \right|$$

On a en outre :

$$d = R_1 u_{1y} - R_2 u_{2y} \qquad (7)$$
$$R_1 u_{1z} = R_2 u_{2z} \qquad (8)$$
$$R_1 u_{1x} - R_2 u_{2x} \qquad (9)$$

Soit au total neuf équations à neuf inconnues. Lorsque le module de $\vec{M}$ n'est pas connu on peut ramener le problème à la résolution de trois équations à trois inconnues par un choix judicieux du repère fixe de coordonnées et quelques opérations mathématiques. Le calculateur 22 a pour rôle de résoudre ces équations et de donner la valeur de ces inconnues : $\Psi_1$, $\emptyset_1$, $R_1$ et $\Psi_2$, $\emptyset_2$, $R_2$ permettent de localiser le point A, donc l'objet, et $\alpha$, $\gamma$ permettent de repérer son orientation.

On peut utiliser un troisième ensemble de mesure $E_3$ formant un trièdre trirectangle supplémentaire. On obtient alors $3+3=6$ équations supplémentaires pour seulement trois inconnues de plus, soit $\Psi_3$, $\emptyset_3$, $R_3$. D'où une certaine redondance dans les informations qui peut être utile.

Il est également possible d'équiper l'objet avec un ou deux dipôles supplémentaires (à des fréquences différentes) qui contribuent à fournir plus d'informations sur un même trièdre. Les dipôles, qui sont au maximum de trois, peuvent être perpendiculaires et former eux-mêmes un trièdre trirectangle. Le problème inverse est alors relativement simple pour un seul trièdre de mesure.

Dans certains cas, si l'on connaît la position de l'objet dans une certaine direction, on peut ne pas utiliser l'axe de mesure parallèle à cette direction et réduire le trièdre à un dièdre. C'est le cas notamment si l'objet est mobile dans un plan : seuls deux axes définissant ce plan sont utiles. Cette réduction des moyens de mesure a été soulignée plus haut.

Le procédé qui vient d'être décrit n'est pas limité à la détection d'un seul object. On peut très facilement travailler sur une pluralité d'objets à condition de prévoir que l'enroulement de l'objet de rang i est excité à une fréquence $f_i$ qui lui est propre. Il faut éviter évidemment que tout harmonique de la fréquence $f_i$ soit voisin d'une fréquence $f_j$ d'un autre objet de rang j, ou d'un de ses harmoniques et veiller à ce que les diverses fréquences soient suffi samment différentes les unes des autres. Ces conditions expérimentales dépendent évidemment de la précision souhaitée, du temps d'intégration des signaux de mesure, la vitesse des mouvements de l'objet etc...

Chaque objet étant ainsi en quelque sorte repéré par une fréquence, la mesure du champ magnétique propre à cet objet se fait à cette fréquence. Cela signifie que les signaux délivrés par les magnétomètres des ensembles $E_1$ et $E_2$ devront être analysés successivement aux diverses fréquences $f_i$ affectées aux divers objets. Pour cela, une première solution consiste effectuer une détection synchrone à l'aide d'un signal de référence caractérisant la fréquence propre de l'objet recherché (par exemple au moyen d'une tension prélevée aux bornes de la résistance 18 évoquée plus haut). Cette tension peut être transmise aux magnétomètres par fil ou par radio ; on effectue alors, derrière ces magnétomètres, une détection synchrone successivement sur les diverses fréquences utilisées. On peut même ne pas transmettre la tension si l'on prend soin d'utiliser le même quartz à l'émission et à la réception.

On peut aussi effectuer une analyse spectrale par transformation de Fourier. Dans le cas où les signaux de mesure sont échantillonnés, on emploiera la transformée de Fourier discrète et certains algorithmes connus dits de transformation de Fourier rapide.

Utilisant le type de magnétomètre évoqué plus haut, le Demandeur a ainsi pu localiser des objets avec une précision de 1 mm pour des distances inférieures au mètre et repérer leurs orientations avec une précision de l'ordre du degré. Le dipôle utilisé était constitué d'un barreau de ferrite excité en basse fréquence à 129 Hz. Sa longueur était de 100 mm, son diamètre de 10 mm, sa perméabilité de 1600, son nombre de spires de 1345 et le courant d'excitation de 65 mA. Ce barreau peut être remplacé par un empilement de plaques fines de mumétal (épaisseur comprise entre 0,05 et 0,2 mm) parallèles aux génératrices du cylindre. Le gain en signal source peut alors être de 10 pour des fréquences inférieures à 100 Hz.

Une optimisation de tous les paramètres (moment magnétique du dipôle, choix des fréquences d'excitation, choix des magnétomètres, minimisation des effets exogènes) permet d'améliorer ces performances d'un facteur 10 soit en précision pour une distance donnée, soit en portée pour une précision donnée.

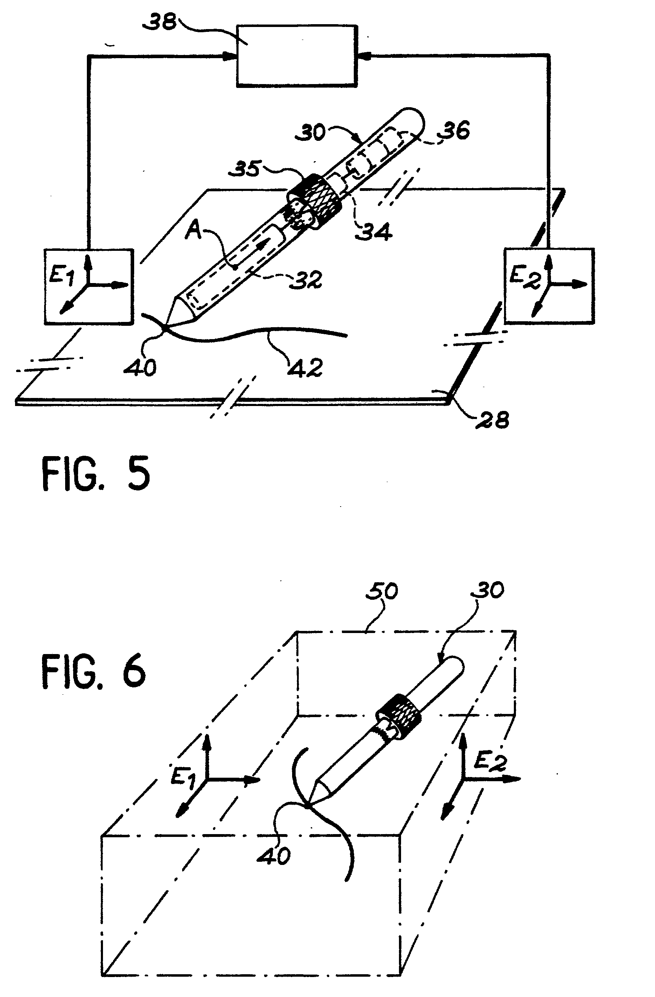

La présente invention a également pour objet un dispositif mettant en oeuvre le procédé qui vient d'être décrit. Il s'agit d'un dispositif de saisie d'écriture et/ou de contours, qui est représenté sur la figure 5. Tel que représenté, ce dispositif comprend :

- un support de saisie 28 à deux dimensions, ce support n'étant ni électriquement conducteur, ni magnétique, (il peut s'agir par exemple d'une plaque de verre ou de plastique),
- un stylo 30 comprenant un dipôle magnétique 32 constitué par un enroulement excité par un générateur de courant alternatif 34 ayant une fréquence déterminée, ce générateur étant alimenté par une pile ou une batterie 36,
- deux ensembles de mesure $E_1$, $E_2$ disposés de part et d'autre du support de saisie 28 et comportant chacun trois magnétomètres directionnels aptes à mesurer la composante selon un axe du champ magnétique ambiant, les trois axes des trois magnétomètres formant un trièdre trirectangle, chaque ensemble étant apte à mesurer les composantes du champ à la fréquence déterminée propre au stylo utilisé,
- un organe de calcul 38 apte à déterminer les coordon nées de l'origine A du dipôle magnétique et les angles d'orientation de ce dipôle et à déduire les coordonnées de l'extrémité 40 du stylo. Cette extrémité suit un contour 42 ou écrit des caractères ou pointe des coordonnées, qui sont ainsi saisis par l'organe 38.

Par rapport au procédé décrit en liaison avec la figure 1, la seule différence est que la localisation du centre A n'est pas une fin en soi mais ne sert qu'à déterminer la position de la pointe 40 du stylo. Cette détermination est possible si l'on connaît la direction du moment magnétique (donc l'orientation du stylo) et la distance séparant le centre A du dipôle de la pointe du stylo.

Selon une disposition avantageuse, le dispositif comprend plusieurs stylos fonctionnant à des fréquences différentes. On peut convenir que chaque stylo correspond à une "couleur" particulière du graphisme qu'il suit ou qu'il trace. La fréquence peut être éventuellement réglable à partir du corps du stylo ou de son capuchon, par exemple au moyen d'une roue molletée 35 reliée à un diviseur de fréquence situé dans l'oscillateur 34. L'opérateur peut ainsi à tout moment attribuer une "couleur" au stylo qu'il utilise et ceci pour distinguer divers tracés ou graphismes.

De façon plus précise, chaque stylo peut, par exemple, comprendre un corps cylindrique non magnétique, à une extrémité duquel est disposé le cylindre de matériau ferromagnétique entouré de son enroulement d'excitation. A l'autre extrémité sont disposés le générateur de courant 34, par exemple un oscillateur à quartz et une pile d'alimentation 36.

Naturellement, chaque stylo peut être également un stylo encreur.

Si l'espace dans lequel se déplace la pointe est à trois dimensions, comme illustré sur la figure 6 sous la référence 50, les deux ensembles de mesure E$_1$ et E$_2$ sont disposés de part et d'autre de ce volume, par exemple au centre des deux faces latérales du parallélépipède 50. Le stylo 30 peut ainsi permettre de pointer des coordonnées précises sur une maquette, de centrale nucléaire par exemple, afin de commander un robot d'intervention ou autoriser la saisie de formes dans l'espace. Dans le cas d'un support plan, ces deux ensembles sont situés de préférence le long des côtés latéraux, ou selon une diagonale.

Comme déjà indiqué à propos du principe général de l'invention, on peut utiliser un troisième ensemble de mesure, ce qui donne une certaine redondance au système.

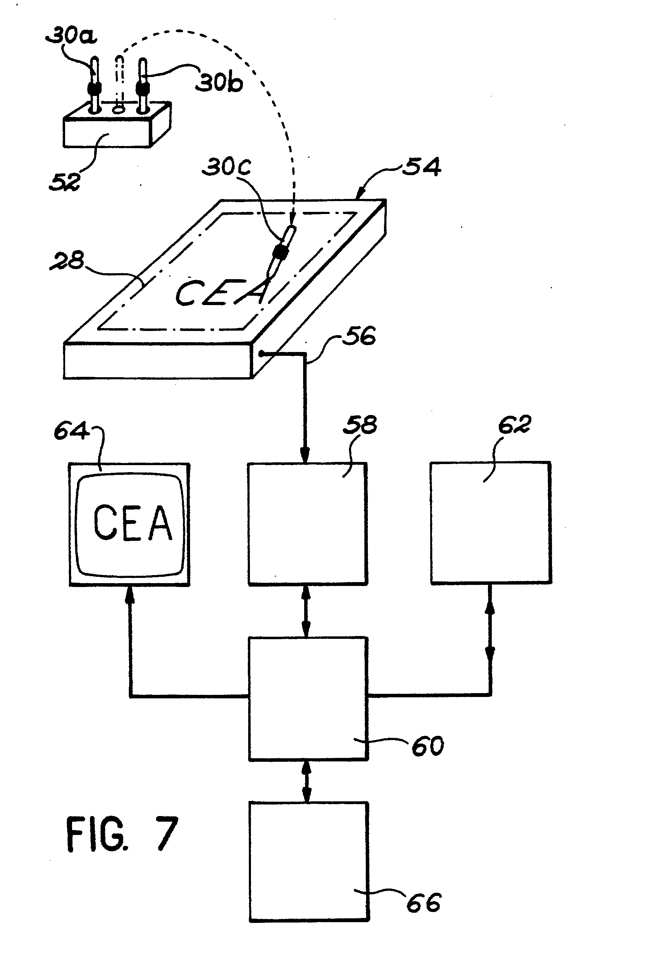

La figure 7 représente un schéma d'ensemble d'un dispositif de saisie selon l'invention. Il comprend un porte stylo 52 avec des stylos 30a, 30b, 30c de couleurs différentes, une table 54 comprenant, sur la face supérieure, un support de saisie 28 et, dans son volume, les trièdres de mesure. De cette table sort un câble 56 constitué de six voies analogiques provenant des six magnétomètres. Ces six voies sont adressées à un circuit 58 de détection synchrone et de numérisation. Les signaux numériques sont traités par un processeur 60 relié à une mémoire de masse 62, à un organe de visualisation 64 et à un terminal 66.

Un tel système présente de nombreux avantages par rapport aux systèmes antérieurs (basés sur une variation de résistivité, ou sur des procédés capacitifs ou acoustiques ou électromagnétiques classiques) :

- il ne nécessite aucun fil reliant le stylo au système d'acquisition,
- il est totalement i/sensible à la pression que la main peut exercer sur la table de saisie,
- il offre la possibilité d'effectuer plusieurs saisies simultanément par différenciation de fréquence,
- il peut travailler aussi bien à 2 qu'à 3 dimensions.

**Revendications**

1. Procédé pour localiser plusieurs objets (10) et déterminer leur orientation dans l'espace par mesure de champ magnétique, ce procédé étant caractérisé par le fait qu'il consiste à:
– équiper chaque objet (10) d'au moins un dipôle magnétique (14) constitué par un enroulement (12) excité par un générateur de courant alternatif (16) ayant une fréquence déterminée, un tel dipôle ayant une origine (A) et un moment magnétique ($\vec{M}$),
– disposer au moins un ensemble de mesures (E$_1$, E$_2$) dans l'espace où est censé être situé l'objet, chaque ensemble comportant des magnétomètres directionnels (M$_{1x}$, M$_{1y}$, M$_{1z}$; M$_{2x}$, M$_{2y}$, M$_{2z}$) aptes à mesurer la composante selon un axe du champ magnétique ambiant,
– mesurer à l'aide de cet ou de ces ensembles les composantes du champ le long des axes à ladite fréquence déterminée,
– calculer, en fonction du résultat de ces mesures, les coordonnées de l'origine de chaque dipôle (A) par rapport aux ensembles de mesures, ce qui localise les objets et les angles d'orientation du moment dipolaire ($\vec{M}$) par rapport aux axes de mesures ce qui donne leur orientation,
– les fréquences des générateurs de courant de chacun des objets étant toutes différentes et les mesures s'effectuant à chacune de ces fréquences, ce qui permet de distinguer les mesures pour chacun des objets.

2. Procédé selon la revendication 1, caractérisé par le fait que pour effectuer la mesure à la fréquence déterminée caractéristique d'un objet, on prélève une partie du courant alternatif d'excitation servant à créer le dipôle dans cet objet, on transmet cette partie dans les ensembles de mesures et on effectue une détection synchrone à cette fréquence.

3. Procédé selon la revendication 1, caractérisé par le fait que pour effectuer la mesure à la fréquence déterminée caractéristique d'un objet, on effectue une analyse spectrale à cette fréquence du signal de mesure pour extraire la composante ayant cette fréquence.

4. Dispositif de saisie d'écriture et de contours, comprenant un support de saisie (28) à au moins deux dimensions, au moins un stylo (30) et des moyens pour déterminer les coordonnées de l'extrémité du stylo, caractérisé par le fait que:
- le support de saisie (28) n'est ni électriquement conducteur, ni magnétique,
- chaque stylo (30) comprend au moins un dipôle magnétique (32) constitué par un enroulement excité par un générateur de courant alternatif (34) ayant une fréquence déterminée, un tel dipôle ayant une origine (A) et un moment magnétique ($\overrightarrow{M}$),
- le dispositif comprend en outre au moins un ensemble de mesure ($E_1$, $E_2$) disposé à proximité du support de saisie (28) et comportant trois magnétomètres directionnels aptes à mesurer la composante selon un axe du champ magnétique ambiant, les trois axes des trois magnétomètres formant un trièdre, chaque ensemble étant apte à mesurer les composantes du champ à la fréquence déterminée propre au stylo utilisé, et un organe de calcul (38) apte à déterminer les coordonnées de l'origine du dipôle magnétique et les angles d'orientation de ce dipôle et à en déduire les coordonnées de l'extrémité du stylo.

5. Dispositif selon la revendication 4, caractérisé par le fait qu'il comprend un ensemble de stylos ($30_a$, $30_b$, $30_c$) pour lesquels les fréquences utilisées sont toutes différentes.

6. Dispositif selon la revendication 4, caractérisé par le fait que chaque stylo comprend un corps cylindrique non magnétique à l'intérieur duquel est disposé un cylindre (32) de matériau ferromagnétique entouré d'un enroulement d'excitation, et à la partie supérieure duquel est disposé un générateur de courant alternatif (34) dont la fréquence est réglable au moyen d'un organe (35) accessible à l'opérateur, ce générateur étant relié à l'enroulement, et enfin une source d'énergie électrique alimentant le générateur.


## Claims

1. Process for locating several objects (10) and determining their orientation in space magnetic field measurement, said process being characterized in that it comprises equipping each object (10) with at least one magnetic dipole (14) constituted by a winding (12) excited by an alternating current generator (16) having a given frequency, such a dipole having an origin (A) and a magnetic moment ($\overrightarrow{M}$), placing at least one measuring array ($E_1$, $E_2$) in the space where the object is considered to be, each array incorporating directional magnetometers ($M_{1x}$, $M_{1y}$, $M_{1z}$, $M_{2x}$, $M_{2y}$, $M_{2z}$) able to measure the component along an axis of the ambient magnetic field, measuring with the aid of said arrays the components of the field along the axes at said given frequency, calculating, as a function of the result of these measurements, the coordinates of the origin of each dipole (A) with respect to the measuring arrays, which locates the objects and the orientation angles of the dipole moment ($\overrightarrow{M}$) with respect to the measuring axes, which gives their orientation, the frequencies of the current generators of each of the objects being different and the measurements taking place at each of these frequencies, which makes it possible to distinguish the measurements for each of the objects.

2. Process according to claim 1, characterized in that for performing the measurement at the given frequency characteristic of an object, part of the alternating exciting current for creating the dipole in said object is sampled and said part is transmitted into the measuring arrays and a synchronous detection takes place at this frequency.

3. Process according to claim 1, characterized in that for performing the measurement at the given frequency characteristic of an object, a spectral analysis takes place at said frequency of the measurement signal in order to extract the component having said frequency.

4. Writing and contour acquisition device comprising an acquisition support (28) with at least two dimensions, at least one pen (30) and means for determining the coordinates of the end of the pen, characterized in that the acquisition support (28) is not electrically conductive or magnetic, each pen (30) comprises at least one magnetic dipole (32) constituted by a winding excited by an alternating current generator (34) having a given frequency, such a dipole having an origin (A) and a magnetic moment ($\overrightarrow{M}$), the device also comprising at least one measuring array ($E_1$, $E_2$) located in the vicinity of the acquisition support (28) and having three directional magnetometers able to measure the component along one axis of the ambient magnetic field, the three axes of the three magnetometers forming a trihedron, each array being able to measure the components of the field at the given frequency inherent in the pen used and a calculating member (38) for determining the coordinates of the origin of the magnetic dipole and the orientation angles of said dipole and for deducing therefrom the coordinates of the end of the pen.

5. Device according to claim 4, characterized in that it comprises a plurality of pens ($30_a$, $30_b$, $30_c$) for which the frequencies used are all different.

6. Device according to claim 4, characterized in that each pen comprises a non-magnetic cylindrical body within which is arranged a cylinder (32) of ferromagnetic material surrounded by an excitation winding and in the upper part of which is placed an alternating current generator (34), whose frequency is regulatable by means of a member (35) accessible to the operator, said generator being connected to the winding, and finally an electric power supply supplying the generator.

**Patentansprüche**

1. Verfahren zum Lokalisieren mehrerer Objekte (10) und zum Bestimmen ihrer Orientierung im Raum durch das Messen eines Magnetfelds, wobei dieses Verfahren gekennzeichnet ist durch die Tatsache, daß es aufweist:
– das Ausrüsten jedes Objekts (10) mit wenigstens einem magnetischen Dipol (14), der aus einer Wicklung (12) besteht, die durch einen Wechselstromgenerator (16) einer bestimmten Frequenz angeregt wird, wobei ein solcher Dipol einen Ursprung (A) und ein magnetisches Moment ($\vec{M}$) besitzt,
– das Anbringen wenigstens einer Anordnung von Meßgeräten ($E_1$, $E_2$) im Raum, wo vermutet wird, daß sich das Objekt befindet, wobei jede Anordnung Richtungsmagnetometer ($M_{1x}$, $M_{1y}$, $M_{1z}$; $M_{2x}$, $M_{2y}$, $M_{2z}$) aufweist, die geeignet sind, die Komponente entlang einer Achse des umgebenden Magnetfelds zu messen,
– das Messen mit Hilfe dieser Anordnung oder dieser Anordnungen der Komponenten des Feldes entlang der Achsen bei der bestimmten Frequenz,
– das Berechnen, in Abhängigkeit vom Ergebnis dieser Messungen, der Ursprungskoordinaten (A) jedes Dipols bezüglich der Meßanordnungen, wodurch die Objekte lokalisiert werden, und der Einstellwinkel des Dipolmoments ($\vec{M}$) bezüglich der Meßachsen, wodurch ihre Orientierung gegeben wird,
– wobei die Frequenzen der Stromgeneratoren jedes der Objekte alle verschieden sind und wobei die Messungen bei jeder dieser Frequenzen durchgeführt werden, wodurch ermöglicht wird, die Messungen für jedes der Objekte zu unterscheiden.

2. Verfahren nach Anspruch 1, gekennzeichnet durch die Tatsache, daß man zum Durchführen der Messung bei der bestimmten, charakteristischen Frequenz eines Objekts einen Teil des anregenden Wechselstroms, der dazu dient, den Dipol in diesem Objekt zu erzeugen, entnimmt, daß man diesen Teil auf die Anordnung der Meßgeräte überträgt und daß man eine synchrone Detektion bei dieser Frequenz durchführt.

3. Verfahren nach Anspruch 1, gekennzeichnet durch die Tatsache, daß man zum Durchführen der Messung nach einer bestimmten charakteristischen Frequenz eines Objekts eine Spektralanalyse nach dieser Frequenz des Meßsignals durchführt, um die Komponente mit dieser Frequenz herauszubekommen.

4. Vorrichtung zur Erfassung von Schrift und Konturen mit einer wenigstens zweidimensionalen Unterlage (28) für die Erfassung, wenigstens einem Zeichenstift (30) und einer Vorrichtung zur Bestimmung der Koordinaten der Spitze des Zeichenstifts, gekennzeichnet durch die Tatsache, daß
– die Erfassungsunterlage weder ein elektrischer Leiter noch magnetisch ist,
– jeder Zeichenstift (30) wenigstens einen magnetischen Dipol aufweist, der aus einer Wicklung besteht und von einem Wechselstromgenerator einer vorgegebenen Frequenz erregt wird, wobei der Dipol einen Ursprung (A) und ein magnetisches Moment ($\vec{M}$) besitzt, und daß
– die Vorrichtung außerdem wenigstens eine in der Nähe der Erfassungsunterlage angebrachte Meßanordnung ($E_1$, $E_2$), die drei Richtungsmagnetometer aufweist, die geeignet sind, die Komponente entlang einer Achse des umgebenden Magnetfelds zu messen, wobei die drei Achsen der drei Magnetometer ein Trieder bilden, wobei jede Anordnung geeignet ist, die Feldkomponenten bei einer vorgegebenen, dem Zeichenstift eigenen Frequenz zu messen, und eine Rechenvorrichtung (38) aufweist, die geeignet ist, die Ursprungskoordinaten des magnetischen Dipols und die Orientierungswinkel dieses Dipols zu bestimmen und daraus die Koordinaten der Spitze des Zeichenstifts herzuleiten.

5. Vorrichtung nach Anspruch 4, gekennzeichnet durch die Tatsache, daß sie eine Anordnung von Zeichenstiften ($30_a$, $30_b$, $30_c$) aufweist, für die die benutzten Frequenzen alle verschieden sind.

6. Vorrichtung nach Anspruch 4, gekennzeichnet durch die Tatsache, daß jeder Zeichenstift einen zylindrischen, nichtmagnetischen Körper, in dessen Innern ein mit einer Erregungswicklung umgebener Zylinder (32) aus ferromagnetischem Material angeordnet ist und in dessen oberem Teil ein Wechselstromgenerator (34), dessen Frequenz mittels einer dem Benutzer zugänglichen Einrichtung (35) regulierbar ist, wobei dieser Generator mit der Wicklung verbunden ist, und eine elektrische Energiequelle aufweist, die den Generator versorgt.

FIG. 1

FIG. 2

FIG. 3

FIG. 4

FIG. 5

FIG. 6

FIG. 7